# EUROPÄISCHE PATENTSCHRIFT

(11) **EP 0 513 596 B1**
(45) Veröffentlichungstag und Bekanntmachung des Hinweises auf die Patenterteilung: **28.06.1995**
(21) Anmeldenummer: 92107372.2
(22) Anmeldetag: 30.04.1992
(51) Int. Cl.: B29C 45/27

(54) **Verteiler**
Manifold
Distributeur

(30) Priorität: 14.05.1991 DE 9107154 U
(43) Veröffentlichungstag der Anmeldung: 19.11.1992
(73) Patentinhaber: Dipl.-Ing. Herbert Günther Gesellschaft mbH, A-2380 Perchtoldsdorf (AT)
(72) Erfinder: Günther, Herbert, Dipl.-Ing., D-3559 Allendorf/Eder (DE)
(74) Vertreter: Olbricht, Karl Heinrich, Dipl.-Phys.

(56) Entgegenhaltungen:
- EP-A- 0 274 005
- DE-B- 1 230 200
- DE-U- 9 003 921

## Beschreibung

Die Erfindung betrifft einen Verteiler gemäß dem Oberbegriff von Anspruch 1.

Herkömmliche Verteiler sind oder haben zum Teil über eingebaute Heizpatronen oder Rohrheizkörper beheizte Blöcke, deren thermische Trennung vom übrigen Spritzguß-Werkzeug oft mangelhaft ist. Zum Erwärmen eines Blocks wird daher eine verhältnismäßig große Aufheizenergie mit entsprechend langen Anheizzeiten benötigt. Insbesondere bei innenbeheizten Systemen bereitet die Reinigung Probleme.

Gemäß US-A-3 091 812 hat ein Verteilersystem ein beheiztes, materialführendes Rohr, das von einer Isoliermasse und von einem in dem Block anliegenden leitenden T-Rohr umschlossen ist. Dieses ist an seinen Enden jeweils mit einer Stahlplatte verschweißt, die gegenüber dem Materialrohr nicht isoliert ist, so daß hier eine massive Wärmeabfuhr mit erheblichen Energieverlusten auftritt. Auch besteht unkontrollierter Einfluß auf die Werkzeugtemperatur. Die Anordnung läßt sich nicht oder höchstens werksseitig und dann mit großem mechanisch-chemischem Aufwand reinigen; im Wartungsfalle muß sie der Anwender durch eine gleichartige Vorrichtung ersetzen.

Bei einem ähnlichen Heißkanalsystem nach US-A-3 520 026 wird ebenfalls der gesamte Verteilerblock aufgeheizt; am Materialübertritt ist ein steiler Temperaturabfall unvermeidlich. Die infolge des hohen Bearbeitungsdruckes auftretenden großen Kräfte müssen auch hier um den Block herumgeführt werden, was den konstruktiven Aufwand entsprechend steigert.

Die EP-A-0 274 005 beschreibt einen Verteiler, dessen Materrialrohr zusammen mit der Heizeinrichtung und einer sie konzentrisch umschließenden Hülse eine selbständige Baueinheit bildet. Sie ist stirnseitig in das Gehäuse ein- bzw. daraus ausbaubar und ihm gegenüber thermisch ein- oder mehrstufig isoliert. Zum Beheizen dient ein Widerstandrohr spezieller Geometrie oder eine 220-V-Wicklung, womit dem inneren Materialrohr an Materialübertritten mehr und in den Bereichen dazwischen weniger Wärme zugeführt wird. Außen sind zum Gehäuse hin Isolierräume vorhanden, die im Betrieb mit erstarrtem Kunststoff gefüllt sind. Unter Stützringen weist die Hülse Luftspalte auf, die zur thermischen Isolierung beitragen.

Ein neuerer Verteiler gemäß DE-U-9 003 921 weist sämtliche Merkmale des Oberbegriffs des Anspruchs 1 auf. Dieser Verteiler benutzt eine z.B. als Widerstandsband ausgebildete Heizeinrichtung, die auf dem Materialrohr elektrisch isoliert angebracht und mit ihm zu einem Vergußkörper wärmeleitend verbunden ist. Für das Materialrohr bzw. den Vergußkörper sind Radialabstützungen vorhanden, namentlich stegförmige Bauelemente zur Anlage an der Innenwand einer Gehäusebohrung und im Bereich der Materialübertritte jeweils ein Bund mit ebener, berührungsfrei zurücktretender Anlagefläche. Derartige Verteiler sind zwar im Betrieb schon günstiger als die älteren Konstruktionen, doch bleiben in mechanischer wie thermischer Hinsicht Wünsche offen.

Um das vorhandene Bedürfnis nach einer Fortentwicklung zu befriedigen, ist es Ziel der Erfindung, an einem Verteiler der vorgenannten Art auf möglichst einfache Weise die mechanisch-thermischen Eigenschaften weiter zu verbessern und bei minimalem Wärmeübergang an das Gehäuse hohe elektrische Sicherheit zu gewährleisten. Montage, Wartung und Reinigung des Systems sollen bequem möglich sein; ferner soll der energetische und zeitliche Betriebsaufwand herabgesetzt werden.

Hauptmerkmale der Erfindung sind im kennzeichnenden Teil von Anspruch 1 angegeben. Weiterbildungen sind Gegenstand der Ansprüche 2 bis 6.

Unter Verwendung eines Vergußkörpers, der das Materialrohr mit elektrischer Isolierung und Heizeinrichtung enthält, wobei zur Abstützung des Materialrohrs bzw. des Vergußkörpers an der Innenwand der Gehäuse-Bohrung stegförmige Bauelemente vorhanden sind und ein jeweils an dem Materialübertritt befindlicher Bund eine relativ zur Innenwand der Bohrung berührungsfrei zurücktretende, vorzugsweise ebene Anlagefläche zum Formschluß mit anderen Bauelementen wie Heißkanaldüsen, zusätzlichen Baueinheiten, Materialrohren u.dgl. aufweist, sieht die Erfindung gemäß dem kennzeichnenden Teil von Anspruch 1 vor, daß die Radialabstützungen der bzw. jeder Baueinheit in bezug auf deren leitende Teile wärmeisolierend ausgebildet oder wärmeisoliert sind. Der Vergußkörper bildet mithin ein Verteilelement, das wärmetrennend in eine Gehäusebohrung bequem einschiebbar und darin lagerichtig fixierbar ist; auch von der Vergußmasse her kann aber nur eine minimale Wärmeabfuhr zum Gehäuse hin erfolgen. Die Anlagefläche jedes Bundes erlauben einen dichten Anschluß der weiteren Komponenten, und zwar mit sehr geringen Wärmeverlusten zum kälteren Gehäuse hin. Weil diametral gegenüber jedem Bund axial ausgedehnte Radialabstützungen vorhanden sind, werden die im Betrieb auftretenden Reaktionskräfte zuverlässig abgefangen. Dank guter Wärmeisolierung herrschen zudem an jedem Materialübergang gleiche Wärmeverhältnisse, so daß ein überaus gleichmäßiges Temperaturprofil erzeugt wird.

Von besonderer Bedeutung ist die Maßnahme des Anspruchs 2, wonach zur Radialabstützung des Materialrohrs in Axialabständen angeordnete Spreizen vorgesehen sind, z.B. mit wenigstens drei stern- oder kreuzförmig angeordneten schmalen Speichen. Diese Radialabstützungen bewirken dank ihres werkstoffbedingten Wärmewiderstands und auch wegen ihrer sehr kleinen wärmeübertragenden Fläche mit Umfangs-Unterbrechungen an den Spreizen eine hervorragende Wärmeisolierung. In den Hohlkehlen der Spreizen, d.h. in den Freiräumen der Speichen, können Längsverbindungen der Heizeinrichtung in Form von Übergangsstegen bequem Platz finden, die im Vergußkörper wärmeleitend fixiert sind.

Die Radialabstützungen können gemäß Anspruch 3 eine mit dem Materialrohr starr verbundene oder einstückige Nabe aufweisen, beispielsweise zur Anbringung von gegebenenfalls hohlen Bolzen nach Anspruch 4, die mit dem Materialrohr verschraubt oder verschweißt sind. Alternativ kann das Materialrohr durch von außen daran angreifende Bolzen, Abstützschrauben o. dgl. fixiert sein, was die Montage bzw. Demontage erleichtert und eventuelles Nachstellen gestattet. Bevorzugt sind laut Anspruch 5 rohrförmige oder massive Gewindestifte sowie sonstige Abstützungen radial und axial zueinander versetzt und insbesondere symmetrisch angeordnet. Das gewährleistet eine gleichmäßige Verteilung der im Betrieb auftretenden Kräfte und Drücke, so daß eine außerordentlich hohe Betriebszuverlässigkeit erzielt wird.

Gemäß Anspruch 6 kann eine Anzahl von Materialauslässen mit Anpaßbuchsen versehen sein, die zwecks räumlich nah benachbarter Anordnung von anschließenden Düsen jeweils vorzugsweise zwei Schrägen aufweisen. Auch eine solche Konstruktion ist fertigungs- und montagetechnisch sehr vorteilhaft.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnung. Darin zeigen:
- Fig. 1: eine Axialschnittansicht eines Verteilers,
- Fig. 2: einen Querschnitt entsprechend der Ebene II-II in Fig. 1,
- Fig. 3: einen Querschnitt entsprechend der Ebene III-III in Fig. 1,
- Fig. 4: eine Axialschnittansicht einer abgewandelten Ausführungsform eines Verteilers,
- Fig. 5: einen Querschnitt entsprechend der Ebene V-V in Fig. 4,
- Fig. 6: einen Querschnitt entsprechend der Ebene VI-VI in Fig. 4,
- Fig. 7: einen vergrößerten Ausschnitt aus einer Axialschnittansicht eines Verteiler-Endes,
- Fig. 8: einen Querschnitt entsprechend der Linie VIII-VIII in Fig. 7,
- Fig. 9: eine Teil-Axialschnittansicht noch einer anderen Verteiler-Ausführungsform,
- Fig. 10: eine Querschnittsansicht entsprechend der Ebene X-X in Fig. 9 und
- Fig. 11: eine Drauf- bzw. Druntersicht auf eine Anpaßbuchse der Ausführungsform von Fig. 9 bzw. 10.

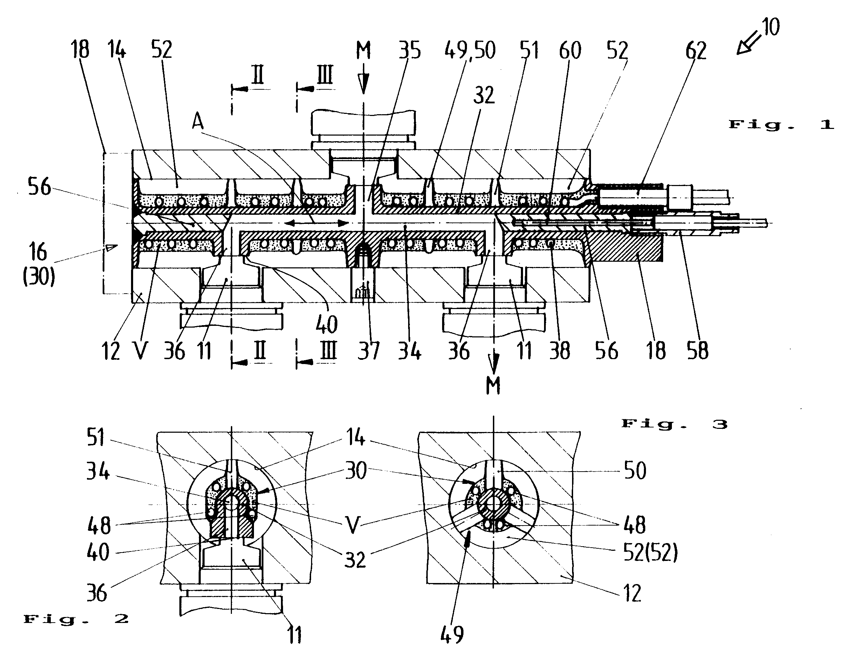

Der in Fig. 1 dargestellte Verteiler ist insgesamt mit 10 bezeichnet. Er hat ein Gehäuse 12 mit einer Gehäusebohrung 14, in das eine patronenartig ausgebildete Baueinheit 16 eingepaßt ist. Anlagestücke 18 bilden beiderseits axiale Abschlüsse für die Baueinheit 16 im Gehäuse 12, in das oben eine (nicht näher bezeichnete) Materialzufuhr-Einrichtung eingesetzt ist, während unten Heißkanaldüsen 11 anschließen.

Die Baueinheit bzw. Patrone 16 hat einen Vergußkörper 30 mit einem Materialrohr 32, auf das eine Heizwicklung 38 aufgebracht ist. Sie ist zwischen dem eigentlichen Heizleiter und einem äußeren Schutzrohr mit einer elektrischen Isolierung versehen, was übersichtlichkeitshalber nicht gezeichnet ist. Ein gut wärmeleitendes Vergußmaterial V, z.B. Aluminium, verbindet die Komponenten außen stoffschlüssig.

Das Materialrohr 32 umschließt einen Hauptkanal 34 mit Materialübertritts-Öffnungen 35, 36. An der Öffnung 35 strömt das zu verarbeitende Material ein, das im Hauptkanal 34 weiter- und durch zwei oder mehr Übertritte 36 ausfließt. Die Material-Strömungsrichtungen sind in Fig. 1 mit M bezeichnet.

Im Bereich der Materialübertritte 35, 36 hat das Materialrohr jeweils eine als Bund 40 ausgebildete flächige Radialabstützung. Sie dient als Anlage- und Kontaktfläche zu weiteren Komponenten wie Heißkanaldüsen, Verzweigungs elementen u.dgl. Gegenüber jedem Bund 40 ist eine Gegenstütze in Form eines schmalen, axial vorzugsweise ausgedehnten Stützsegments 51 angeordnet. Der Vergußkörper 30 hat außerdem z.B. stern- oder kreuzförmig ausgebildete Spreizen 49 und am Umfang unterbrochene Rippen 50, die speichenförmig ausgebildet sein können. Diese Radialabstützungen 49, 50, 51 bestehen aus schlecht wärmeleitendem Werkstoff wie Titan, Aluminiumoxidkeramik o.dgl., liegen satt in der Bohrung 14 an und haben dank ihrer schmalen Gestaltung sehr geringe Auflageflächen. Dadurch wird die Wärmeübertragung an das Gehäuse 12 auf ein Minimum beschränkt. Außerdem lassen die Radialabstützungen 40, 49, 50 den Ausgleich von Dehnungen bzw. Schrumpfungen zwischen dem heißen Materialrohr 32 und dem vergleichsweise kalten Gehäuse 12 zu.

Zwischen den einzelnen Radialabstützungen 49, 50 sind in der Bohrung 14 äußere Hohlräume 52 vorhanden, welche die Wärmeisolation zwischen der Baueinheit 16 und dem Gehäuse 12 verbessern. Diese Zwischenräume 52 bleiben dank guter Passung der Bünde 40 materialfrei. Die Hohlkehlen der Spreizen 49 können Längsstege 48 der Heizwicklung 38, d.h. Heizdrähte aufnehmen und sind ebenfalls mit der Vergußmasse V wärmeleitend ausgefüllt, so daß eine sehr gute Wärmebrücke zwischen den einzelnen Heizungs-Teilbereichen besteht (Fig. 3).

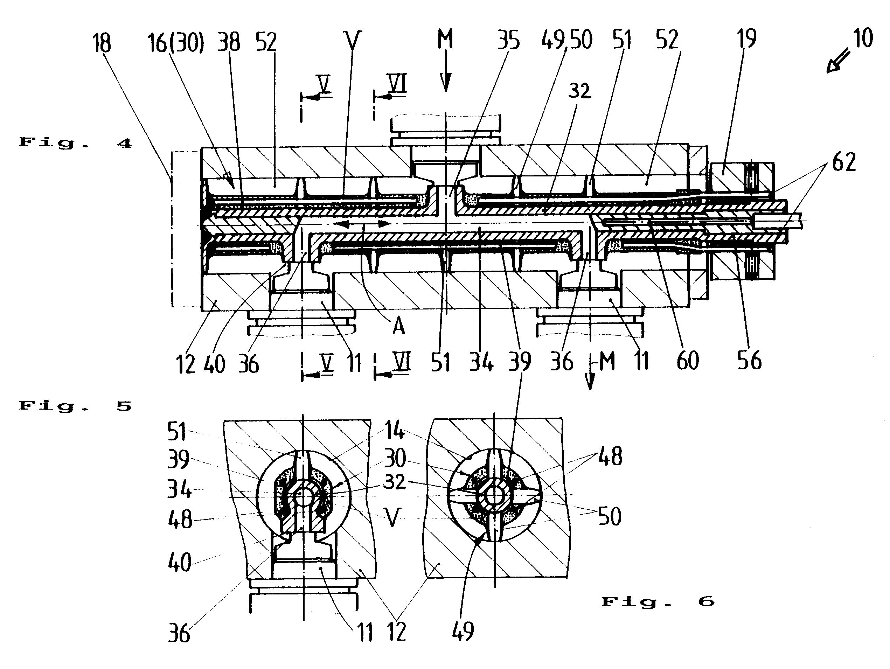

Stirnseitig ist das Gehäuse 12 durch je ein Anlagestück 18 (Fig. 1) oder durch ein Endstück 19 (Fig. 4) abgeschlossen. Dabei endet der Verteiler-Hauptkanal 34 axial jeweils in einem Umlenkstopfen 56. In einen davon (rechts in Fig. 1 und 4) kann ein Thermofühler 60 ragen, der von einem Verschlußstopfen 58 gehalten ist. Die Wicklungsanschlüsse lassen sich daneben einführen, wie am Beispiel der Anschlüsse 62 in Fig. 1 und 4 gezeigt. Ein zentraler Haltebolzen 37 kann zur Positionierung des Vergußkörpers 30 gegenüber der Material-Zuführeinrichtung dienen (Fig. 1).

Wesentliche Unterschiede der Ausführungsbeispiele von Fig. 1 und 4 bestehen darin, daß im ersten Falle eine Heizwicklung 38 für den Betrieb mit Netzspannung (220 V) vorgesehen ist. Die in Fig. 4 gezeichnete Anordnung ist hingegen für Niederspannungs-Betrieb ausgelegt; der Heizdraht 48 erstreckt sich hierbei in Längs- bzw. Axialrichtung A und das Materialrohr 32 ist mit einer (schematisch angedeuteten) elektrischen Isolierschicht 39 versehen. In Betracht kommen ferner Widerstandsbänder, deren Umfangs-Abwicklung eine Mäandergestalt aufweisen kann. Niederspannungs-Heizelemente werden bevorzugt ohne elektrische Isolation auf die Isolierschicht 39 des Materialrohrs 32 aufgewickelt und vor dem Eingießen elektrisch isoliert.

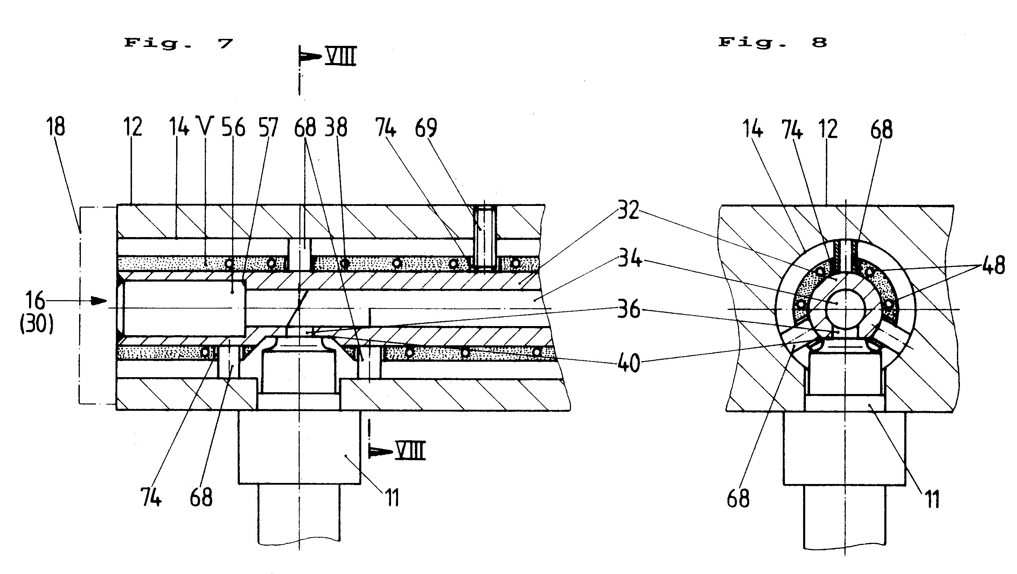

Die in Fig. 7 und 8 veranschaulichte Ausführungsform zeigt das Ende eines prinzipiell gleichartig aufgebauten Verteilers, wobei in die Bohrung 14 des Gehäuses 12 eine Patrone bzw. Baueinheit 16 eingepaßt ist, deren Materialrohr 32 zum Anlagestück 18 hin eine Schulter 57 für den Umlenkstopfen 56 aufweist. Zur Radialabstützung dient jeweils ein gegebenenfalls hohler Stift oder Bolzen 68, der gegenüber der Vergußmasse V wärmeisoliert zwischen der Innenwand der Bohrung 14 und dem Materialrohr 32 angeordnet ist. Man erkennt aus Fig. 7 und 8, daß beiderseits der Heißkanaldüse 11 je zwei und gegenüber ein weiterer Bolzen 68 angeordnet sein können, so daß insgesamt fünf in 120°-Winkelabständen angeordnete, bevorzugt rohrförmige Radialstützen vorhanden sind, welche den Materialübertritt 36 symmetrisch übergreifen und vorzugsweise aus schlecht wärmeleitendem Material wie Chrom-Nickel-Stahl bestehen. Alternativ kann man einen Gewindestift 69 einsetzen, der - z.B. mit einem Isolierring 74 - zur Abstützung und Fixierung des Materialrohrs 32 an einer Zwischenstelle dient. Man erkennt, daß diese Massivoder Rohrstifte sowie sonstige Abstützungen radial und axial zueinander versetzt und insbesondere symmetrisch angeordnet sein können.

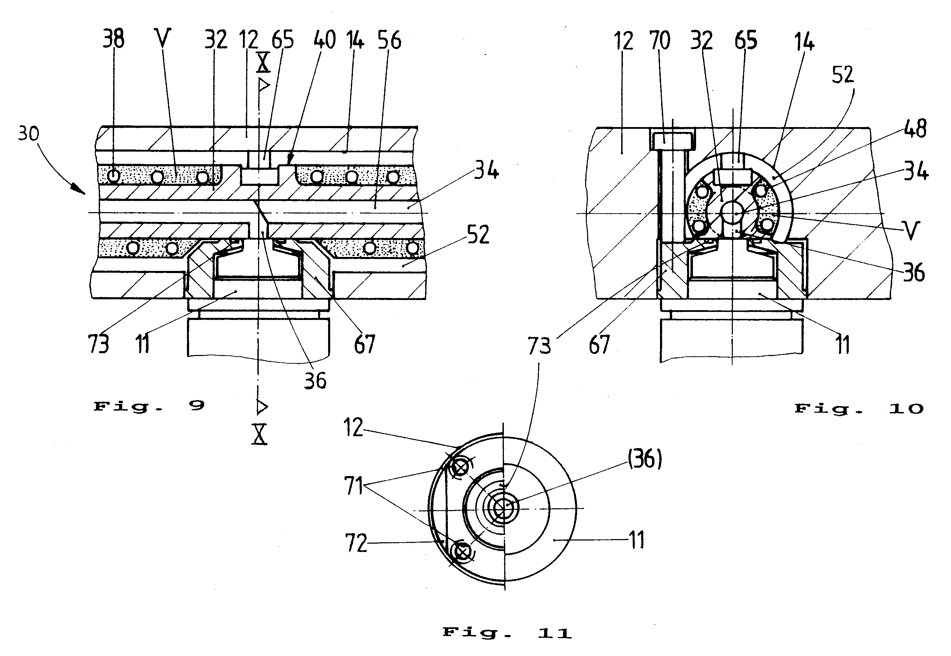

Im Ausführungsbeispiel der Fig. 9 bis 11 schließt an den Materialaustritt 36 eine (nur schematisch angedeutete) Heißkanaldüse 11 mittels einer Anpaßbuchse 67 an, die zwei Schrägen 72 aufweisen kann, um eine räumlich dichte Packung benachbarter Heißkanalelemente zu ermöglichen. Gewindelöcher 71 (Fig. 11) nehmen Schrauben 70 (Fig. 10) auf, welche die Anpaßbuchse 67 im Gehäuse 12 so festlegen, daß der Vergußkörper 30 über die Abstützung 65 in der Gehäusebohrung 14 genau positioniert ist. Zwischen dem Materialrohr 32 und der Anpaßbuchse 67, die im kalten Verteilergehäuse 12 fixiert ist, können Wärmedehnungen bzw. -schrumpfungen ohne Beeinträchtigung der Dichtigkeit stattfinden. Zum Gegenlagern des Vergußkörpers 30 dient eine Radialabstützung 65 gegenüber dem Materialaustritt 36. Zwecks zusätzlicher Abdichtung kann die Anpaßbuchse 67 an der Fläche, welche direkt am Materialrohr 32 anliegt, eine Ringnut 73 mit einer metallischen O-Ring-Dichtung aufweisen (Fig. 9 bis 11).

Man erkennt, daß ein erfindungsgemäßer Verteilerblock 10 eine Gehäusebohrung 14 zum stirnseitigen Einsetzen einer Baueinheit 16 hat, in der ein Materialrohr 32 von einer Heizeinrichtung, z.B. einer Wicklung 38, umschlossen und mit ihr zu einem Vergußkörper 30 wärmeleitend verbunden ist. Zur Radialabstützung ist gegenüber Materialübertritten 35, 36 jeweils ein Bund vorhanden, der den Außendurchmesser D des Vergußkörpers 30 radial überragt und eine relativ zur Innenwand der Bohrung 14 berührungsfrei zurücktretende Anlagefläche hat, an der Bauelemente wie Heißkanaldüsen 11, zusätzliche Baueinheiten 16, Materialrohre 32 und dgl. satt anliegen. Wärmeisolierende Stützteile des Vergußkörpers 30 sind schmale Spreizen 49, Rippen 50, Stützsegmente 51 und bevorzugt rohrförmige Bolzen 68, die in Axialrichtung A symmetrisch verteilt sind und Hohlräume 52 bilden. Anlagestücke 18, 19 schließen den Verteiler 10 axial dicht ab.

Wesentliche Vorteile der Erfindung beruhen darauf, daß dank der neuartigen, sehr übersichtlichen und symmetrischen Konstruktion an jedem Materialübergang 35, 36 im Betrieb gleiche Wärmeverhältnisse gegeben sind. Beiderseits ist jeweils die gleiche Anzahl von Windungen der Heizwicklung 38 oder einer gleichartigen, ebenso dimensionierten Heizeinrichtung unterbringbar. Wichtig ist ferner, daß das innenliegende heiße Materialrohr 32 keine besondere Einspannung an den Enden benötigt. Die symmetrische Ausbildung hat überdies den großen Vorzug, daß das Heißkanal-Verteilersystem hydraulisch vollkommen ausgeglichen ist. Dies gestattet es, bei prinzipiell gleichem Aufbau unter Verwendung eines Materialrohres 32 von größerem Innendurchmesser, in dem zwei oder mehr parallele Hauptkanäle 34 Platz finden, auf kleinstem Raum auch Serien-Anordnungen zu verwirklichen.

### Legende

- A: Axialrichtung
- D: Außendurchmesser
- M: Materialfluß
- V: Vergußmasse
- 10: Verteiler
- 11: Heißkanaldüse
- 12: Gehäuse
- 14: Gehäusebohrung
- 16: Baueinheit / Patrone
- 18: Anlagestück / Abschluß
- 19: Endstück
- 30: Vergußkörper
- 32: Materialrohr
- 34: Hauptkanal
- 35: Materialeintritt
- 36: Materialaustritt
- 37: Haltebolzen
- 38: Heizwicklung
- 39: Isolierschicht
- 40: Radialabstützung/Bund
- 48: Längssteg
- 49: Spreize / Stern
- 50: Umfangsrippe / Speiche
- 51: Stützsegment
- 52: Hohlraum/Zwischenraum
- 56: Umlenkstopfen
- 57: Schulter
- 58: Verschlußstopfen
- 60: Thermofühler
- 62: Anschluß
- 65: Radialabstützung
- 67: Anpaßbuchse
- 68: Bolzen / Stift
- 69: Gewindestift
- 70: Schrauben
- 71: Gewindeloch
- 72: Schräge
- 73: Ringnut
- 74: Isolierring

## Patentansprüche

1. Verteiler für Spritzguß-Heißkanalsysteme, in dessen insbesondere blockförmigem Gehäuse (12) Bohrungen (14) zur Aufnahme von darin stirnseitig einsetzbaren Baueinheiten (16) vorhanden sind, die jeweils ein wärmeisoliertes materialführendes Rohr (32) aufweisen, das stirnseitig und/oder am Umfang Materialübertritte (35,36) sowie eine z.B. als Wicklung oder Widerstandsband ausgebildete Heizeinrichtung (38) hat, welche mit elektrischer Isolierung (39) das Materialrohr (32) umschließt und mit diesem wärmeleitend zu einem Vergußkörper (30) verbunden ist, wobei dieser samt dem Materialrohr (32) im Bereich jedes Materialübertritts (35,36) von einem Bund (40), der den Außendurchmesser (D) des Materialrohrs (32) radial überragt, und an der Innenwand der Bohrung (14) durch stegförmige Bauelemente (49, 50, 51) radial abgestützt ist und wobei jeder Bund (40) eine relativ zur Innenwand der Bohrung (14) berührungsfrei zurücktretende, vorzugsweise ebene Anlagefläche zum Formschluß mit anderen Bauelementen wie Heißkanaldüsen (11), zusätzlichen Baueinheiten (16), weiteren Materialrohren (32) u. dgl. aufweist, dadurch **gekennzeichnet**, daß die Radialabstützungen (40,49,69) der bzw. jeder Baueinheit (16) in bezug auf deren wärmeleitende Teile, namentlich auf die Vergußmasse (V), wärmeisolierend ausgebildet oder wärmeisoliert sind.

2. Verteiler nach Anspruch 1, dadurch **gekennzeichnet**, daß die Radialabstützungen des Materialrohrs (32) in Axialabständen angeordnete Spreizen (49) sind, die z. B. drei stern- oder kreuzförmig ausgebildete schmale Speichen (50) aufweisen.

3. Verteiler nach Anspruch 2, dadurch **gekennzeichnet**, daß die Radialabstützungen (40,49) eine mit dem Materialrohr (32) starr verbundene oder einstückige Nabe aufweisen.

4. Verteiler nach einem der Ansprüche 1 bis 3, dadurch **gekennzeichnet**, daß zur Radialabstützung am Materialrohr (32) Bolzen (68) starr befestigt sind, z.B. durch Verschraubung (69) oder Verschweißung, oder daß das Materialrohr (32) durch von außen daran angreifende Bolzen, Abstützschrauben o. dgl. fixiert ist.

5. Verteiler nach einem der Ansprüche 1 bis 4, dadurch **gekennzeichnet**, daß rohrförmige oder massive Gewindestifte (69) sowie sonstige Abstützungen (40,49,51) radial und axial zueinander versetzt und insbesondere symmetrisch angeordnet sind.

6. Verteiler nach einem der Ansprüche 1 bis 5, dadurch **gekennzeichnet**, daß eine Anzahl von Materialauslässen (36) mit Anpaßbuchsen (67) versehen sind, die zwecks räumlich nah benachbarter Anordnung von anschließenden Düsen (11) vorzugsweise jeweils zwei Schrägen (73) aufweisen.

## Claims

1. Manifold for an injection molding hot runner system, comprising a block-shaped casing (12) with bores (14) for receiving cartridge-like units (16) adapted to be inserted facewise and each including a thermally insulated material flow tube (32) that has at its face ends and/or at its periphery flow transfer openings (35, 36) and that further has an electric heating device (38), e.g. a coil or resistor strip, with an electrical insulator (39) encompassing the flow tube (32) to which the heating device (38) is joined with a thermoconductive casting (V) so that a cast body (30) is formed, the latter and the flow tube (32) being radially supported by collars (40) in the regions of the flow transfer openings (35, 36) protruding over the outer diameter (D) of the flow tube (32) and further by web-like spacers (49, 50, 51) relative to the inner wall of the bore (14), each collar (40) having, recessed relative to the bore (14) and free of contact thereto, a preferably plane engaging face for form-fit to other components such as nozzles (11), further units (16), additional flow tubes (32), etc., wherein the radial supports (40, 49, 69) of each unit (16) are thermoresistant or thermally insulated relative to the thermoconductive parts, in particular to the casting (V).

2. Hot runner system according to claim 1, wherein the radial supports for the flow tube (32) are axially spaced spiders (49) that comprise at least three narrow spokes (50), e.g. in a star or cross configuration.

3. Hot runner system according to claim 2, wherein the radial supports (40, 49) comprise a hub integral with or rigidly connected to the flow tube (32).

4. Hot runner system according to any one of claims 1 ot 3, wherein for radial support of the flow tube (32), pins (68) are secured to it, e.g. by a set screw (69) or by welding, or wherein the flow tube (32) is set by means of externally engaging bolts, resting screws or the like.

5. Hot runner system according to any one of claims 1 to 4, wherein tubular or solid tapped pins (69) or other supports (40, 49, 59) are radially and axially offset to each other and are arranged symmetrically.

6. Hot runner system according to any one of claims 1 to 5, wherein a plurality of flow outlets (36) is equipped with a fitting bush (67) each for attaching nozzles (11), said bush (67) preferably having two bevels (72) for close packing of adjacent nozzles (11).

## Revendications

1. Distributeur pour systèmes de moulage par injection et à canaux chauds, où dans son boítier (12) notamment en forme de bloc se trouvent des perforations (14) accueillant des unités de construction (16) se laissant placer à l'intérieur de celles-ci par le côté frontal et possédant respectivement un tube conducteur de matériau (32) isolé de la chaleur qui a sur le côté frontal et/ou sur la circonférence des points de passage du matériau (35, 36) et un dispositif de chauffage (38), par exemple sous forme de bobinage ou de bande porteuse de résistances, qui enveloppe le tube de matériau (32) avec une isolation électrique (39) et qui est assemblé thermoconductiblement avec celui-ci pour former un corps de moulage (30), celui-ci et le tube de matériau (32) étant soutenus radialement dans la zone de chaque point de passage du matériau (35, 36) par un collet (40) qui dépasse radialement le diamètre extérieur (D) du tube de matériau (32) et par des éléments de construction (49, 50, 51) en forme de traverses sur la paroi intérieure de la perforation (14), chaque collet (40) possédant une surface d'appui de préférence plane, en retrait et sans contact par rapport à la paroi intérieure de la perforation (14) et devant être solidaire de forme avec d'autres éléments de construction comine des filières à canaux chauds (11), des unités de construction supplémentaires (16), d'autres tubes de matériau (32) ou autres, caractérisé en ce que les appuis radiaux (40, 49, 69) de la ou de chaque unité de construction (16) sont construits pour isoler de la chaleur ou sont isolés de la chaleur par rapport à leurs parties conductrices de chaleur, notamment la masse de moulage (V).

2. Distributeur selon la revendication 1, caractérisé en ce que les appuis radiaux du tube de matériau (32) sont des étrésillons (49) disposés à des distances axiales, qui ont par exemple trois rayons (50) en forme d'étoile ou de croix.

3. Distributeur selon la revendication 2, caractérisé en ce que les appuis radiaux (40, 49) possèdent un moyeu assemblé fixement avec le tube de matériau (32) ou bien fait en une seule pièce avec lui.

4. Distributeur selon l'une des revendications 1 jusqu'à 3, caractérisé en ce que pour le soutien radial, des chevilles (68) sont fixées inamoviblement sur le tube de matériau (32), par exemple par vissage (69) ou par soudage, ou que le tube de matériau (32) est fixé par des chevilles venant de l'extérieur, par des vis de soutien ou autres.

5. Distributeur selon l'une des revendications 1 jusqu'à 4, caractérisé en ce que des tiges filetées (69) tubulaires ou massives ou tout autre soutien (40, 49, 51) sont décalés radialement ou axialement les uns des autres et sont notamment disposés symétriquement.

6. Distributeur selon l'une des revendications 1 jusqu'à 5, caractérisé en ce qu'un certain nombre de sorties de matériau (36) est pourvu de douilles d'adaptation (67) qui de préférence possèdent, en vue d'une disposition rapprochée des filières rattachées (11), deux côtés obliques respectifs (73).
